# EUROPÄISCHE PATENTSCHRIFT

(11) **EP 2 133 670 B1**
(45) Veröffentlichungstag und Bekanntmachung des Hinweises auf die Patenterteilung: **15.10.2014**
(21) Anmeldenummer: 09007387.5
(22) Anmeldetag: 04.06.2009
(51) Int. Cl.: G01F 23/296

(54) **Vorrichtung zum Erfassen eines Füllstands mit einem Dämpfungsbecher**
Device for detecting a fill level comprising a stillwell
Dispositif de détermination d'un niveau de remplissage avec un boîtier d'amortissement

(30) Priorität: 12.06.2008 DE 102008027969
(43) Veröffentlichungstag der Anmeldung: 16.12.2009
(73) Patentinhaber: Hella KGaA Hueck & Co., 59552 Lippstadt (DE)
(72) Erfinder: Buhrdorf, Andreas, 28329 Bremen (DE); Wirth, Alexander, 28321 Thedinghausen (DE); Claassen, Herbert, 28201 Bremen (DE); Zoyke, Ingo, 28816 Stuhr (DE); Sternberg, Michael, 27337 Blender (DE); Palloks, Jürgen, 26655 Westerstede (DE); Niemann, Thomas, 27753 Delmenhorst (DE); Stürmann, Jörg, 28209 Bremen (DE)
(74) Vertreter: Siekmann, Gunnar

(56) Entgegenhaltungen:
- EP-A1- 0 653 611
- WO-A1-2008/009277
- DE-A1-102005 011 049
- DE-B3-102006 045 654

## Beschreibung

Die Erfindung betrifft eine Vorrichtung zum Erfassen eines Füllstands eines Fluids in einem Behälter, wobei die Vorrichtung einen Dämpfungsbecher mit einer Einlassöffnung und im Bereich des Dämpfungsbechers einen Ultraschallwandler aufweist.

Derartige Vorrichtungen sind beispielsweise aus der DE 100 57 397 A1 und der WO 2007/028365 A1 bekannt. Dort ist ein Ultraschallwandler, insbesondere ein piezoelektrisches Element am Boden eines Dämpfungsbechers angeordnet und sendet Schallwellen aus, die an der Grenzfläche des Fluids reflektiert werden. Die reflektierten Wellen werden vom Ultraschallwandler empfangen und aus der Laufzeit wird die Höhe des Füllstands errechnet. Der Ultraschallwandler ist dabei nicht offen in dem Behälter angeordnet, da es dort durch Ölschaum und Schwankungen des Ölniveaus während des Fahrbetriebs zu Messungenauigkeiten kommt. Es wird daher ein Dämpfungsbecher eingesetzt, der durch eine vergleichsweise kleine Öffnung mit dem Behälter verbunden ist, so dass sich über diese Öffnung auch in dem Dämpfungsbecher das Flüssigkeitsniveau einstellt, das auch in dem übrigen Behälter herrscht. Der Vorteil ist jedoch, dass in dem Dämpfungsbecher Schwankungen deutlich kleiner sind und Turbulenzen und Strömungen an der Oberfläche und auch die Schaumbildung reduziert wird.

Aus der DE 10 2006 045 654 B3 ist eine weitere Vorrichtung bekannt. Diese weist einen Kombinationssensor mit einem piezokeramischen Sensor und einer Deckscheibe auf, mit denen Schwingungsimpulse ausgesendet werden. Aus der Beeinflussung des Schwingungsverhaltens sind sowohl der Füllstand als auch der Zustand einer Flüssigkeit bestimmbar. Zur Erfassung der Temperatur ist dem Kombinationssensor zusätzlich ein Temperatursensor zugeordnet.

Ein Problem bleibt jedoch darin bestehen, dass auch Luftblasen, z. B. in Form von Mikroblasen in dem Medium enthalten sind und Dichteunterschiede darstellen, an denen eine Reflektion der akustischen Ultraschallwelle, so wie auch an der Grenzfläche Flüssigkeit - Luft erfolgt. Diese Luftblasen sind daher auch Reflektions- und Streukörper und stören die Füllstandsmessung.

In der WO2008/009277A1 wird ein Ultraschallsensor zur Bestimmung eines Flüssigkeitspegels beschrieben, der in einer Messkammer eines langgestreckten Gehäuses angeordnet ist. Neben der Messkammer weist das Gehäuse wenigstens eine weitere Kammer auf, die strömungstechnisch vor der Messkammer angeordnet ist. Die äußerste der Kammern weist einen Einlass für die zu messende Flüssigkeit auf und steht mit den anderen Kammern des Ultraschallsensors in Verbindung. Um die Strömung der zu messenden Flüssigkeit vorzugeben, können im Inneren des Gehäuses zusätzlich Trenneinrichtungen angeordnet sein.

Das Ultraschallsensorsystem der EP 0 653 611 A1 ist ähnlich aufgebaut und weist einen Leitblechsatz aus zwei konzentrischen Hülsen auf, die an einem unteren Ende eines Dämpfungsbechers angeordnet sind und zwei Kammern ausbilden. In den Hülsen und in dem Dämpfungsbecher sind radiale Öffnungen vorgesehen, über die eine zu messende Flüssigkeit in das Innere der Hülsen bzw. des Dämpfungsbechers gelangt. Die radialen Öffnungen sind versetzt zueinander angeordnet, so dass die Flüssigkeit nicht direkt zum mittig angeordneten Dämpfungsbecher strömt.

Ein anderer Ansatz wurde in der DE 10 2005 011 049 A1 gewählt. Dieses Dokument offenbart eine Kraftstoff-Füllstands-Messvorrichtung mit einem Messrohr und einem kraftstoffdurchlässigen, dünnwandigen Umhüllungselement, wobei das Umhüllungselement das Messrohr zumindest teilweise in einem vorbestimmten Abstand großflächig umhüllt. Innerhalb dieses Umhüllungselementes ist nahe eines Kraftstoff-Füllstandssensors eine Kraftstoff-Eintrittsöffnung in dem Messrohr vorgesehen, wobei der Kraftstoff-Eintrittsöffnung ein Kraftstoff-Labyrinth zugeordnet ist.

Der Erfindung liegt die Aufgabe zugrunde, eine Vorrichtung zum Erfassen eines Füllstands eines Fluids in einem Behälter, wobei die Vorrichtung einen Dämpfungsbecher mit einer Einlassöffnung und im Bereich des Dämpfungsbechers einen Ultraschallwandler aufweist, derart weiterzuentwickeln, dass das Eindringen von Luftblasen in den Dämpfungsbecher verringert wird.

Die Lösung dieser Aufgabe erfolgt mit einer Vorrichtung mit den Merkmalen des Patentanspruchs 1. Vorteilhafte Weiterbildungen der Erfindung sind in den Unteransprüchen beschrieben.

Eine Vorrichtung zum Erfassen eines Füllstands eines Fluids in einem Behälter, wobei die Vorrichtung ein Vorvolumen, einen Dämpfungsbecher mit einer Einlassöffnung und im Bereich des Dämpfungsbechers einen Ultraschallwandler aufweist, bei der das Vorvolumen eine Einlassöffnung aufweist, durch die Fluid in das Vorvolumen eintreten kann und bei der das Vorvolumen mit einer Einlassöffnung des Dämpfungsbechers verbunden ist, zeichnet sich erfindungsgemäß dadurch aus, dass aus dem Vorvolumen ein Rohr mit definierter Länge und definiertem Durchmesser in den Dämpfungsbecher führt, und dass dieses Rohr die Verbindung zwischen Vorvolumen und Dämpfungsbecher darstellt und in den Dämpfungsbecher oder in das Vorvolumen hineinragt. Unter dem Vorvolumen wird ein Körper oder ein weitgehend geschlossenes Gefäß verstanden, das derart ausgebildet ist bzw. ein derartiges Volumen aufweist, das im Verhältnis zum Volumen des Dämpfungsbechers eine relevante Menge Öl aufnehmen kann. Dort erfährt das Medium einen Dämpfungsprozess und Mikroblasen können in diesem Bereich ausgasen. Auf diese Weise wird ein gegenüber dem im übrigen Behälter vorliegenden Medium schon beruhigtes und vergleichsweise blasenarmes Medium in den Dämpfungsbecher geführt, so dass dort die Messung mit höherer Genauigkeit erfolgen kann.

Bei im Übrigen identischer Ausgestaltung der Vorrichtung ist durch Veränderung dieses Rohrs, insbesondere Veränderung der Länge dieses Rohrs, die Dämpfung justierbar ist. Eine große Länge des Rohrs führt zu einer großen Dämpfung und eine kleine Länge des Rohrs zu einer kleinen Dämpfung.

Bevorzugt hat das Vorvolumen ein Volumen, das mindestens so groß ist wie das Volumen des Dämpfungsbechers. In einer besonders bevorzugten Ausgestaltung der Erfindung hat das Vorvolumen ein Volumen, das mindestens dem doppelten Volumen des Dämpfungsbechers entspricht. Auf diese Weise kann auch bei Füllstandsänderungen, z. B. beim Nachfüllen von Motoröl eine sehr schnelle Reaktionszeit erreicht werden, in der aus dem Vorvolumen Öl in den Dämpfungsbecher geführt wird, das beruhigt und schon relativ blasenfrei ist, so dass eine genaue Messung möglich ist. Es ist jedoch auch durchaus möglich, das Vorvolumen mit einem deutlich kleineren Volumen auszubilden, insbesondere auch mit einem Volumen, das kleiner ist als der Dämpfungsbecher. Mit einem solchen Vorvolumen können Vorteile gegenüber herkömmlichen Ausgestaltungen vor allem im dynamischen Fahrbetrieb erzielt werden.

In einer anderen bevorzugten Ausgestaltung der Erfindung weist das Vorvolumen eine geometrische Struktur zur Führung des Mediums auf. Diese geometrische Struktur bildet günstigerweise Fließbremsen aus, die die Wegstrecke von der Einlassöffnung des Vorvolumens zum Auslass des Vorvolumens bzw. zu der Einlassöffnung des Dämpfungsbechers verlängern. Dadurch kann in das Vorvolumen neu eintretendes Medium nicht direkt in den Dämpfungsbecher gelangen. Die hierdurch erzeugte längere Verweilzeit des Mediums im Vorvolumen führt zu einer besseren Ausgasung der Mikroblasen. Außerdem erzwingen die geometrischen Strukturen eine Durchmischung des neu eingetretenen Mediums mit dem vorhandenen Medium im Vorvolumen. Bevorzugt sind die geometrischen Strukturen derart angeordnet, dass bei einer runden Grundfläche des Vorvolumens das Medium etwa einmal um den Mittelpunkt der Grundfläche geleitet ist. Hier ist eine Vielzahl von verschiedenen Möglichkeiten denkbar. Es können z. B. labyrinthartige Strukturen, Gitterstrukturen oder horizontale Führungsstrukturen oder Fingerstrukturen gebildet werden. Die geometrischen Strukturen werden auch als Umlenkungskonturen zur Beruhigung beschrieben. Diese Umlenkungskonturen können sternförmig, mäanderförmig oder in mehreren Schichten ausgeführt sein. Dabei ist es günstig, wenn die Einlassöffnung des Vorvolumens und die Einlassöffnung des Dämpfungsbechers um nahezu 360 Grad gegeneinander versetzt sind. In dem Vorvolumen ist dazu eine durchgehende Sperre eingebaut, die die "kurze" Verbindung zwischen den beiden Einlassöffnungen verhindert, so dass das Medium einmal um den Mittelpunkt herumgeführt werden kann. Auch eine Spiralausgestaltung, bei der das Medium nicht nur einmal, sondern mehrfach um den Mittelpunkt geführt wird, ist denkbar.

Eine weitere Ausgestaltung der Erfindung besteht darin, dass der Dämpfungsbecher im unteren Bereich, in dem der Ultraschallwandler angeordnet ist, gegenüber dem oberen Bereich größere horizontale Abmessungen aufweist. Dadurch wird insbesondere im Bereich um den Ultraschallwandler herum eine gewisse Bewegung des Mediums erzielt, so dass eine Verschlammung verhindert wird und auch ein Temperaturausgleich stattfindet, so dass auch eine genauere Temperaturmessung erfolgen kann. Dazu wird bevorzugt auch ein Temperatursensorelement in der Vorrichtung, insbesondere vergleichsweise nahe zu dem Ultraschallwandler angeordnet. Das Rohr ist dabei bevorzugt so ausgerichtet, dass das durch das Rohr strömende Medium auf dieses Temperatursensorelement gerichtet ist und Temperaturänderungen auf diese Weise sehr schnell erfasst werden. Dieser verbreiterte Bereich des Dämpfungsbechers ist mit dem oberen Bereich des Dämpfungsbechers durch den normalen Durchmesser des Dämpfungsbechers im übrigen Bereich verbunden. Da der Dämpfungsbecher typischerweise vergleichsweise klein und schmal ist, so ist die Verbindung hier so klein, dass man sie im unteren Bereich strömungstechnisch auch als getrenntes Volumen betrachten kann. Dies gilt insbesondere dann, wenn der Durchtritt zum oberen Teil des Dämpfungsbechers, der auch als Steigrohr bezeichnet wird, zusätzlich verkleinert wird. Das Vorvolumen ist dabei bevorzugt mit diesem unteren Bereich des Dämpfungsbechers verbunden. In einer besonders bevorzugten Ausgestaltung der Erfindung ist das Vorvolumen auf dem unteren verbreiterten Bereich des Dämpfungsbechers angeordnet und umschließt das vom unteren Teil ausgehende Steigrohr des Dämpfungsbechers. In den Außenabmessungen bilden dabei das Vorvolumen und der untere verbreiterte Bereich bevorzugt eine Einheit. Das Vorvolumen ist bevorzugt von oben mit dem unteren verbreiterten Bereich des Dämpfungsbechers verbunden. Dadurch wird in diesem unteren Bereich, in dem auch der Ultraschallwandler angeordnet ist, ein gewisser Fluss des Mediums erreicht, so dass eine Verschlammung verhindert wird, der Ultraschallwandler umspült wird und die Temperatur des Mediums auch in diesem Bereich realistisch gemessen werden kann.

Der verbreiterte Bereich kann auch als Kammer ausgebildet sein, die zusammen mit dem Vorvolumen unterhalb des eigentlichen Dämpfungsbechers angeordnet ist. Dabei kann der Ultraschallsensor am Boden dieser inneren Kammer oder am Boden des eigentlichen Steigrohrs angeordnet sein. Durch die Verwendung des Vorvolumens und dann einer zusätzlichen Kammer oder eines erweiterten Bereichs, die in unmittelbarer Verbindung mit dem Steigrohr oder der Messstrecke des Dämpfungsbechers stehen, ergibt sich der Vorteil, dass das im Vorvolumen von Mikroblasen befreite Öl in dem dem Dämpfungsbecher zugeordneten Bereich oder der zugeordneten Kammer aufgenommen und gespeichert wird und aus dieser bei Niveauänderungen schnell in den Dämpfungsbecher abgegeben wird. Der Durchmesser des Rohres, das das Vorvolumen mit dem Dämpfungsbecher verbindet, beträgt bevorzugt weniger als die Hälfte des Durchmessers des Dämpfungsbechers. Bevorzugt beträgt der Durchmesser des Rohres 30 % bis 50 %, insbesondere 35 % bis 45 % des Durchmessers des Dämpfungsbechers.

In einer weiteren Ausgestaltung der Erfindung weist das Vorvolumen in der Außenkontur eine Einbuchtung auf und in dieser Einbuchtung ist die Einlassöffnung angeordnet. Dadurch ist die Einlassöffnung in einer geschützten Position und wird nicht ohne Weiteres von Ölschaum, sondern primär von flüssigem Medium erreicht. In diesem Bereich ist bevorzugt auch die Auslassöffnung oder Entlüftungsöffnung angeordnet. Die Einlassöffnung und auch die Entlüftungsöffnung sind dabei bevorzugt in die Einbuchtung gerichtet, also seitlich in der Einbuchtung angeordnet. Dadurch wird ein weiterer Schutz erreicht. Man kann diese Positionierung auch als eine eingezogene Taschenstruktur beschreiben. Dadurch wird eine direkte Anströmung dieser Öffnungen vermieden.

Die Erfindung betrifft weiterhin einen Motor, insbesondere einen Kraftfahrzeugmotor, der die oben beschriebene Vorrichtung aufweist. Insbesondere wird durch die Erfindung auch ein Kraftfahrzeug mit einer solchen Vorrichtung weiterentwickelt.

Nachfolgend wird die Erfindung anhand eines in der Zeichnung dargestellten bevorzugten Ausführungsbeispiels weiter erläutert. Im Einzelnen zeigen die schematischen Darstellungen in:
- Fig. 1:: Eine schematische Darstellung der Vorrichtung in einem Behälter, die nicht das Rohr zeigt;
- Fig. 1a:: Eine abgewandelte erfindungsgemäße Ausführungsform zur Darstellung gemäß Figur 1;
- Fig. 2:: Eine geschnittene Draufsicht auf eine mögliche Ausführungsform der Vorrichtung, die nicht das Rohr zeigt;
- Fig. 2a:: Eine abgewandelte erfindungsgemäße Ausführungsform zur Darstellung gemäß Figur 2;
- Fig. 3:: Eine geschnittene Draufsicht auf eine zweite mögliche Ausführungsform der Vorrichtung, die nicht das Rohr zeigt;
- Fig. 3a:: Eine abgewandelte erfindungsgemäße Ausführungsform zur Darstellung gemäß Figur 3;
- Fig. 4:: Eine geschnittene Seitenansicht einer dritten mögliche Ausführungsform der Vorrichtung, die nicht das Rohr zeigt;
- Fig. 4a:: Eine abgewandelte erfindungsgemäße Ausführungsform zur Darstellung gemäß Figur 4;
- Fig. 5:: Eine geschnittene Draufsicht auf eine vierte mögliche Ausführungsform der Vorrichtung, die nicht das Rohr zeigt;
- Fig. 5a:: Eine abgewandelte erfindungsgemäße Ausführungsform zur Darstellung gemäß Figur 5;
- Fig. 6 a, b, c:: Perspektivische Ansichten von geschnittenen bzw. teilgeschnittenen Ansichten und eine Draufsicht auf eine fünfte mögliche Ausführungsform der Vorrichtung, die nicht das Rohr zeigt;
- Fig. 6d:: Eine abgewandelte erfindungsgemäße Ausführungsform zur Darstellung gemäß Figur 6;
- Fig. 7:: Einen Querschnitt durch eine weitere Ausgestaltung der erfindungsgemäßen Vorrichtung; und
- Fig. 8:: Eine perspektivische Außenansicht eines Teils der erfindungsgemäßen Vorrichtung zur Darstellung insbesondere der Einlassöffnungen.

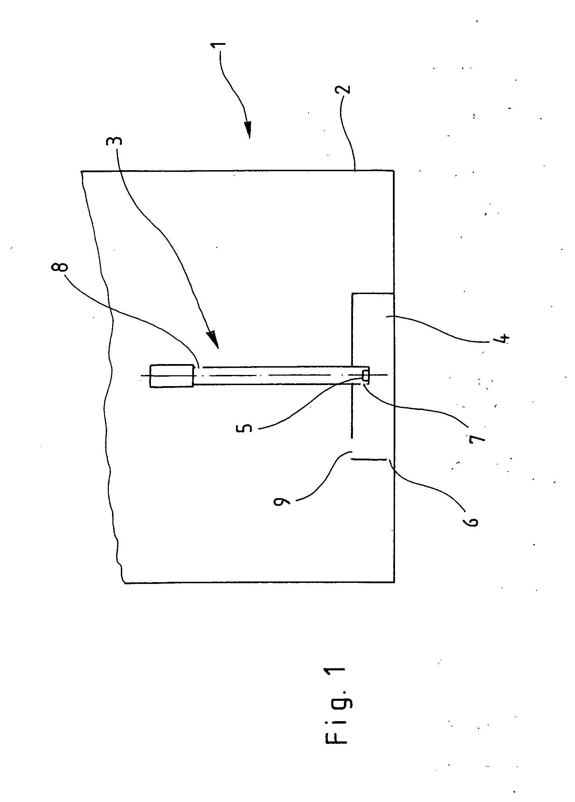

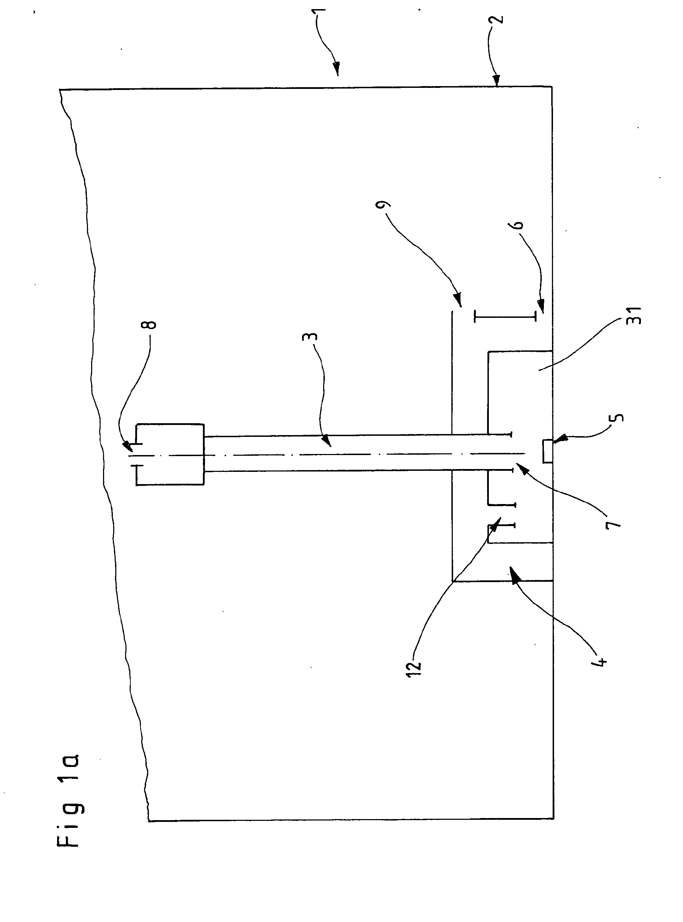

In Fig. 1 ist in einer schematischen Darstellung eine geschnittene Seitenansicht der Vorrichtung 1 in einem Behälter 2 dargestellt. Der Behälter 2 nimmt das Medium auf, insbesondere Öl in einem Motor eines Kraftfahrzeugs. Es ist die Aufgabe der Vorrichtung 1 den Füllstand des Mediums in dem Behälter 2 festzustellen. Dazu dient insbesondere ein Ultraschallwandler 5, der in der Nähe des Bodens des Behälters 2 angeordnet ist und Ultraschallwellen nach oben aussendet. Diese Ultraschallwellen werden an der Grenzfläche des Mediums zur Luft teilweise reflektiert und dann vom Ultraschallwandler 5 wieder empfangen. Aus der Laufzeit der Signale kann die zurückgelegte Strecke ermittelt werden. Dabei ist auch die Art des Mediums von Bedeutung. Der Ultraschallwandler 5 ist dabei in einem Dämpfungsbecher 3 oder Steigrohr angeordnet, der im unteren Bereich eine Einlassöffnung 7 und im oberen Bereich eine Entlüftungsöffnung 8 aufweist. Der Dämpfungsbecher 3 verhindert starke Schwankungen des Mediums im Messbereich und soll durch seine Ausgestaltung auch das Eintreten von Ölschaum oder anderem Schaum verhindern, so dass an der gemessenen Oberfläche eine definierte Oberfläche und kein Schaumbereich vorhanden ist, der die Messung beeinflusst. Hier besteht jedoch die Besonderheit, dass dem Dämpfungsbecher 3 ein Vorvolumen 4 vorgeschaltet ist, das gegenüber dem Behälter 2 ein getrenntes und abgedichtetes Volumen darstellt. Das Vorvolumen 4 weist im unteren Bodenbereich eine Einlassöffnung 6 und im oberen Bereich eine Entlüftungsöffnung 9 auf. Weiterhin ist der Dämpfungsbecher 3 in das Vorvolumen hineingeführt, so dass die Einlassöffnung 7 des Dämpfungsbechers 3 in dem Vorvolumen 4 öffnet und daher der Dämpfungsbecher 3 aus dem Vorvolumen 4 gespeist wird. In dem Vorvolumen 4 erfolgt eine erste Beruhigung des im Mediumbehälter 2 umlaufenden Mediums und dabei erfolgt auch ein Ausgasen des Mediums in dem Vorvolumen 4, so dass sich die Anzahl von Mikroblasen während des Aufenthalts im Vorvolumen 4 deutlich verringert. Dadurch tritt nur nahezu blasenfreies Medium in den Dämpfungsbecher 3 ein und die Messung kann dort besonders gut und störungsfrei vorgenommen werden.

In der Fig. 1a ist eine leicht abgewandelte Ausführungsform dargestellt. Gleiche Elemente sind mit gleichen Bezugszahlen gekennzeichnet. Im Unterschied zur Fig. 1 ist hier die Einlassöffnung 6a, die in das Vorvolumen 4 führt röhrenartig ausgebildet. Die Einlassöffnung ist nicht ausschließlich als Öffnung ausgebildet, sondern bildet einen Kanal aus. Durch die Länge bzw. den Durchmesser des Kanals und die Länge des Kanals kann die Geschwindigkeit des Aus- bzw. Eintritts in das Vorvolumen 4 genau geregelt werden. Innerhalb des Vorvolumens 4 ist eine innere Kammer 31 vorgesehen, die mit Vorvolumen 4 durch ein Rohr 12 verbunden ist. Dies Rohr 12 erstreckt sich in die innere Kammer 31 mit einer definierten Länge und einem definierten Durchmesser und regelt auf diese Weise den Durchfluss. Die innere Kammer 31 nimmt am Fuß den Ultraschallsensor 5 auf, von dem aus das blasenfreie Öl in den Dämpfungsbecher 3, insbesondere die Messstrecke dort strömt. Füllstandsänderungen im Messbecher 3 können durch blasenfreies Öl aus der Kammer 31 schnell ausgeglichen werden.

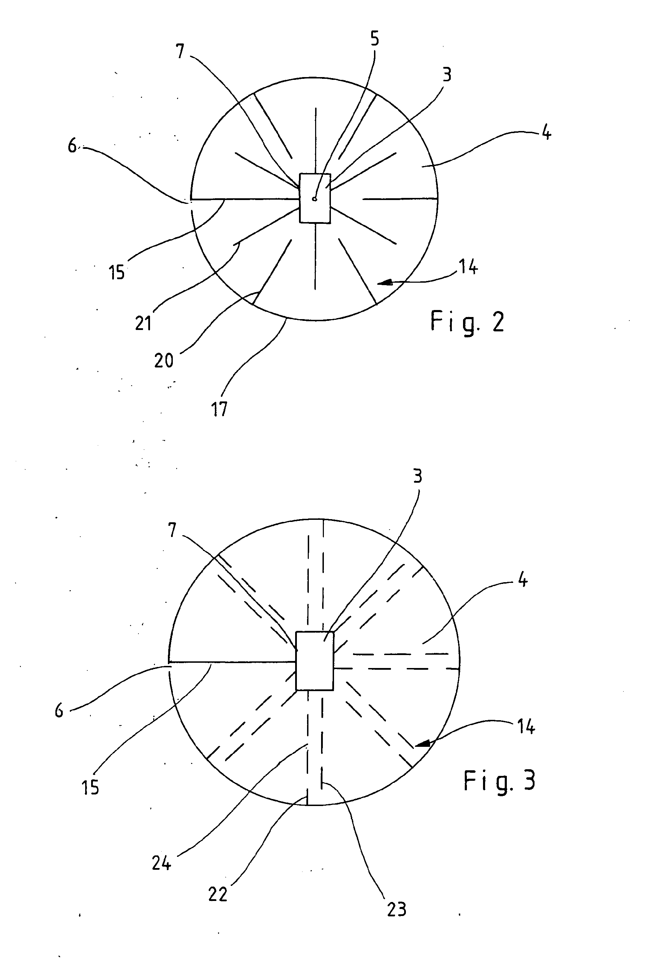

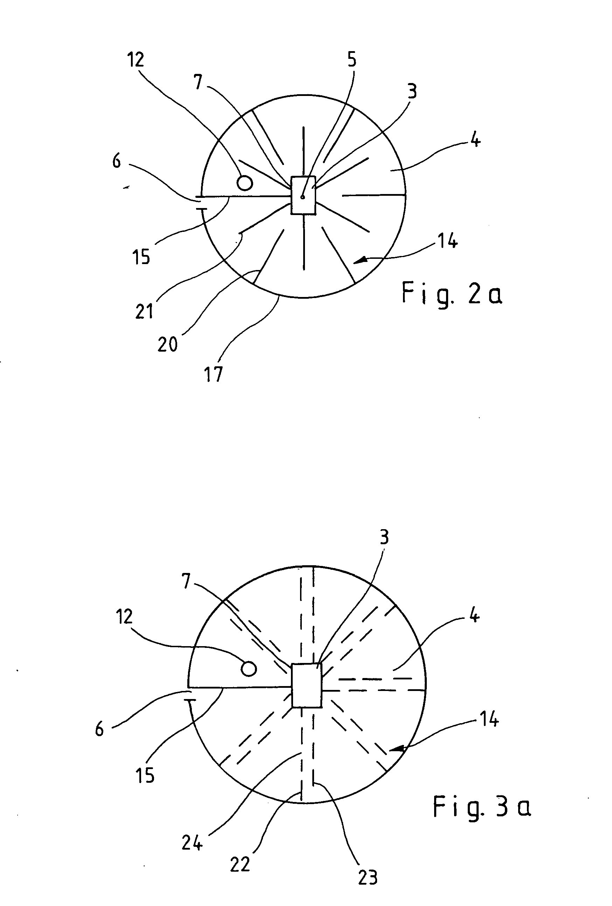

In Fig. 2 ist eine geschnittene Draufsicht auf eine erste Ausführungsform des Vorvolumens 4 mit dem Dämpfungsbecher 3 und dem darin angeordneten Ultraschallwandler 5 dargestellt. In dem Vorvolumen 4 sind geometrische Strukturen 14 vorgesehen, die Fließbremsen darstellen und zu einer Verlängerung des Weges des Mediums im Vorvolumen 4 führen. Neben der Einlassöffnung 6 ist eine durchgängige Wand 15 in dem Vorvolumen 4 vorgesehen, die sich von der Wand des Vorvolumens 4 bis zum Dämpfungsbecher 3 durchgängig erstreckt. Die Einlassöffnung 7 zum Dämpfungsbecher 3 ist gegenüber der Einlassöffnung 6 um nahezu 360° versetzt. Zwischen dieser Einlassöffnung 6 und der Einlassöffnung 7 ist die Wand 15 angeordnet, so dass ein direkter Durchtritt des Mediums von der Einlassöffnung 6 zur Einlassöffnung 7 nicht möglich ist, sondern das Medium den vollständigen Weg von nahezu 360° durchlaufen muss. Zur weiteren Verlängerung sind hier alternierend Fließbremsen angeordnet, die sich einmal von der Wand 17 des Vorvolumens 4 nach innen erstrecken, dabei jedoch einen Durchlass freilassen und sich zum anderen in Form der Strukturen 21 vom Dämpfungsbecher 3 nach außen erstrecken, dabei jedoch einen Durchlass zur Wand 17 des Vorvolumens frei lassen. Das Medium fließt daher um die Labyrinthstrukturen 20 und 21 jeweils herum und wird daher auf einem vergleichsweise langen Weg von der Einlassöffnung 6 einmal um den Dämpfungsbecher herum zur Einlassöffnung 7 des Dämpfungsbechers geführt.

In Fig. 2a ist eine alternative Ausführungsform dargestellt, die zur Ausführungsform gemäß Fig. 1a korrespondiert. Das Rohr 12, dass in die innere Kammer 31 führt, ist dabei benachbart zu der durchgehenden Wand 15 angeordnet, also erst am Ende der Beruhigungszone. Das in der Struktur beruhigte Öl wird also erst zum Schluss durch das Rohr 12 in definierter Geschwindigkeit in die Kammer 31 unterhalb der Beruhigungsstruktur geleitet.

In Fig. 3 ist eine zweite Ausführungsform der geometrischen Strukturen 14 dargestellt. Auch hier sind Einlassöffnung 6 und Einlassöffnung 7 durch eine durchgehende Wand 15 voneinander getrennt. Die geometrischen Strukturen 14 sind hier auch als Beruhigungskontur in Form einer Gitterstruktur mit Doppelwänden 22 und 23 mit gegeneinander versetzten Durchlässen ausgebildet. Das Medium muss also durch mehrere Doppelwände 22 und 23, die Durchlässe aufweisen, hindurchtreten. Die Durchlässe einer ersten Wand 22 sind versetzt zu den Durchlässen einer kurz dahinter angeordneten Wand 23 ausgerichtet, so dass durch jede dieser Doppelwände 22 und 23 die Fließgeschwindigkeit effektiv vermindert wird. Die Umlenkungskonturen in den Fig. 2 und 3 sind sternförmig ausgebildet.

In der der Fig. 3a ist eine Abwandlung zu Fig. 3 dargestellt, ebenso wie die Fig. 2a zu Fig. 1a korrespondiert. Auch hier ist das Rohr 12 benachbart zu der durchgehenden Wand 15 angeordnet. Die Einlassöffnung 6a ist röhrenartig ausgebildet.

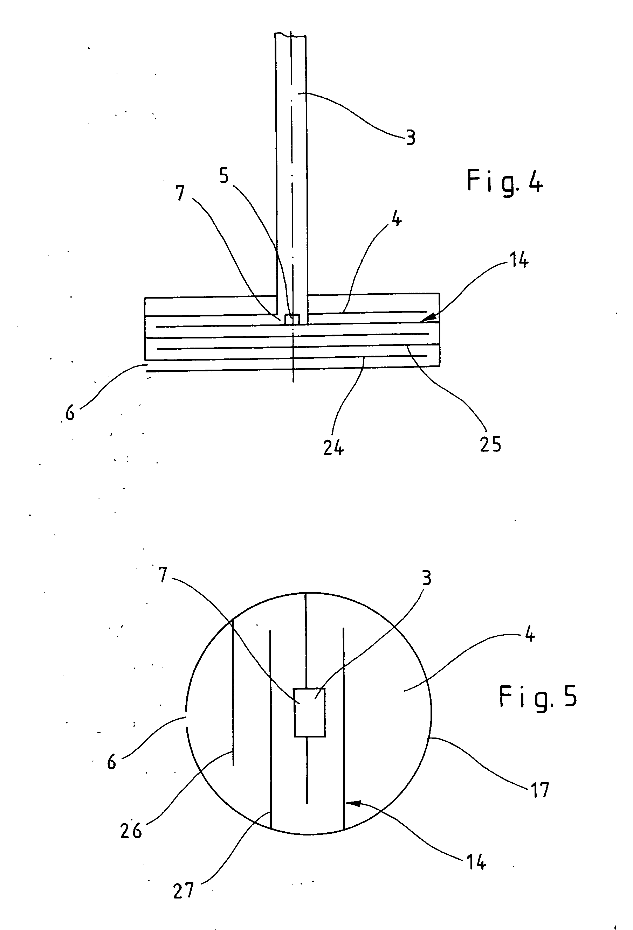

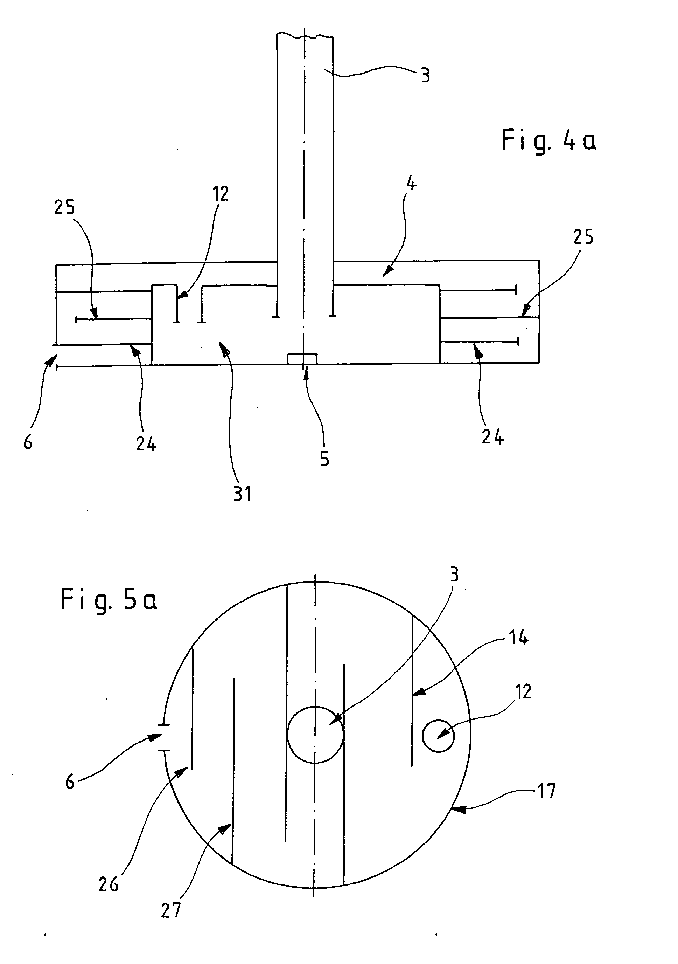

Ein weiteres Bespiel einer geometrischen Struktur 14 innerhalb des Vorvolumens 14 ist in Fig. 4 dargestellt. In dieser geschnittenen Seitenansicht ist das Vorvolumen 4 in der Seitenansicht dargestellt. Dabei ist das Vorvolumen 4, so wie in Kombination mit den anderen Figuren erkennbar, bevorzugt als kurzer Zylinder oder dosenartig ausgebildet. Der Dämpfungsbecher mit dem am Boden angeordneten Ultraschallsensor 5 ragt in das Vorvolumen 4 hinein. Die Einlassöffnung 6 befindet sich in einem unteren Endbereich. Die durch die geometrische Struktur 14 ausgebildete Beruhigungskontur ist hier durch sich in horizontaler Richtung erstreckende Wände 24 und 25 ausgebildet, wobei die Wände alternierend an den gegenüberliegenden Seiten des Vorvolumens 4 angeordnet sind, so dass das Medium gezwungen ist, an der Wand 24 entlang zu laufen, bis in deren Endbereich der offene Bereich erreicht ist und dann um die Wand 25 bis zu deren gegenüberliegenden Ende mit dem offenen Endbereich herumzulaufen. Auf diese Weise wird eine lange Wegstrecke innerhalb des Vorvolumens 4 durchlaufen und das Medium kann in dieser Zeit ausgasen. Die Umlenkungskontur ist hier in mehreren Schichten ausgebildet.

In Fig. 4a ist eine Abwandlung zur Darstellung gemäß Fig. 4 dargestellt. Innerhalb des Vorvolumens 4 ist eine innere Kammer 31 angeordnet, aus der letztlich der Dämpfungsbecher 3 mit seiner Messstrecke gespeist wird. In diese innere Kammer führt aus dem Vorvolumen 4 ein Rohr 12 mit definierter Länge und definierten Durchmesser bzw. definierten Querschnitt. Gegenüber dem Ausführungsbeispiel in Fig. 4 ist hier also unterhalb der Messstrecke 3 ein vergrößertes Volumen vorgesehen, in dem Öl gespeichert ist, das Vorvolumen 4 durchlaufen hat und dadurch mikroblasenfrei ist. Aus diesem vergrößerten Volumen bzw. der Kammer 31 wird der Dämpfungsbecher gespeist.

In Fig. 5 ist eine weitere Ausführungsform der Vorrichtung dargestellt, wobei das Vorvolumen 4 hier als geometrische Struktur 14 eine Fingerstruktur mit alternierenden Fingern 26 und 27 aufweist, die jeweils an gegenüberliegenden Seiten der äußeren Wand 17 des Vorvolumens 4 angeordnet sind. Diese Struktur kann auch als mäanderförmig bezeichnet werden.

In Fig. 5a ist eine dazu abgewandelte Ausführungsform dargestellt, in der aus dem Vorvolumen 4 ein Rohr 12 zu dem Dämpfungsbecher 3 und insbesondere dort zu einer vergrößerten Kammer führt, von der aus der Dämpfungsbecher 3 gespeist wird. Ergänzend ist darauf hinzuweisen, dass auch die Einlassöffnung 6a kanalartig ausgebildet ist.

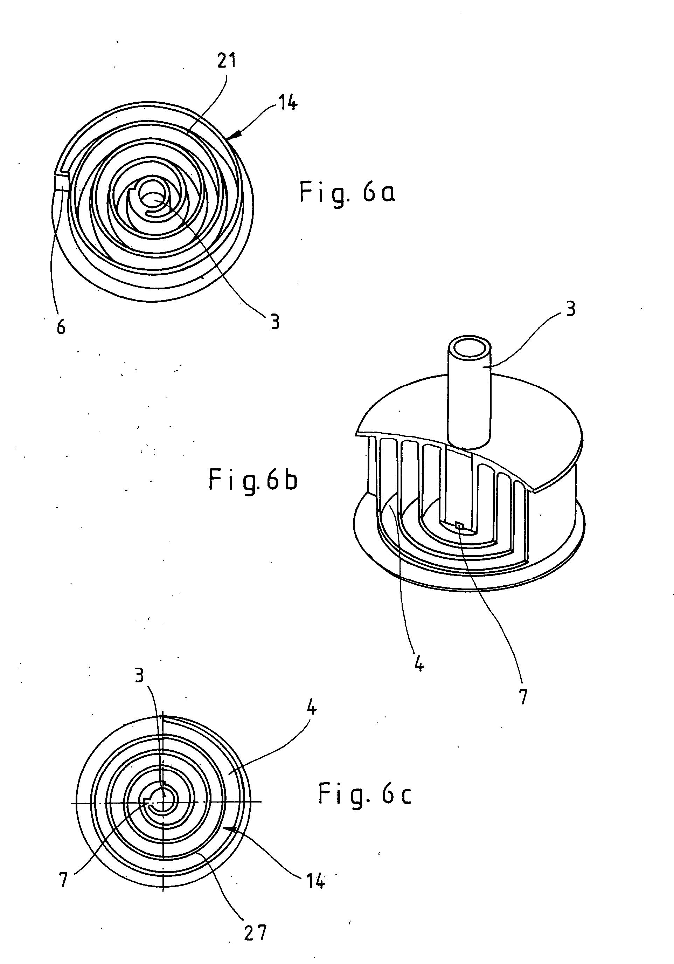

Eine andere Ausgestaltung ist in den Figuren 6a bis 6c dargestellt. In der perspektivischen Draufsicht gemäß Fig. 6a ist erkennbar, dass die geometrische Struktur 14 hier als umlaufende Wendel 27 ausgebildet ist, so dass im hier gezeigten Beispiel das Medium fast 4-mal um den Mittelpunkt mit dem Dämpfungsbecher 3 umläuft, bis es am Ende dieses gewendelten Ganges die Einlassöffnung 7 zum Dämpfungsbecher erreicht. In Fig. 6b ist das Vorvolumen 4 mit seiner spiralförmigen geometrischen Struktur 14 in einer anderen perspektivisch geschnittenen Seitenansicht dargestellt. Hier ist auch die obere Decke dargestellt, die das Vorvolumen 4 nach oben abschließt. Insgesamt ist das Vorvolumen 4 ein bis auf die beschriebenen Einlassöffnungen 6, den Übergang in die Einlassöffnung 7 des Dämpfungsbechers und eventuelle Entlüftungsöffnungen ein geschlossenes Volumen. In Fig. 6c ist noch einmal die geschnittene Draufsicht dargestellt. Gleiche Elemente sind mit gleichen Bezugszeichen gekennzeichnet.

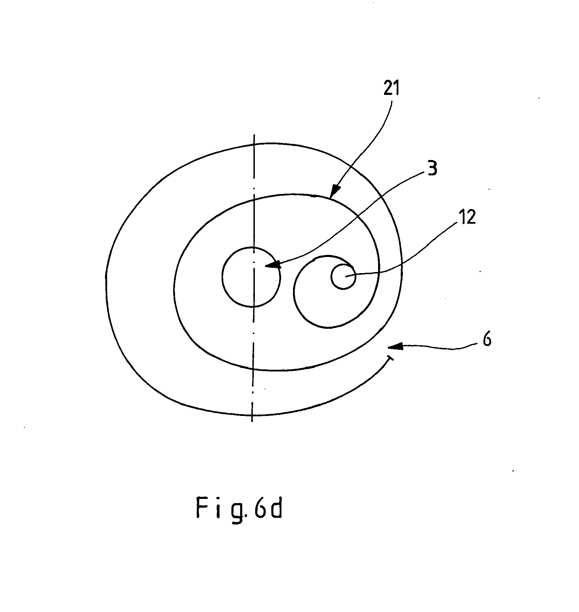

In Fig. 6d ist eine zu den Figuren 6a bis 6c abweichende Ausführungsform dargestellt. Die Spirale endet hier außermittig neben dem Dämpfungsbecher 3. Aus dem Endpunkt der Spirale führt das Rohr 12 mit definiertem Durchmesser und definierter Länge zum Eingang des Dämpfungsbechers 3 und insbesondere dort in eine erweiterte Kammer.

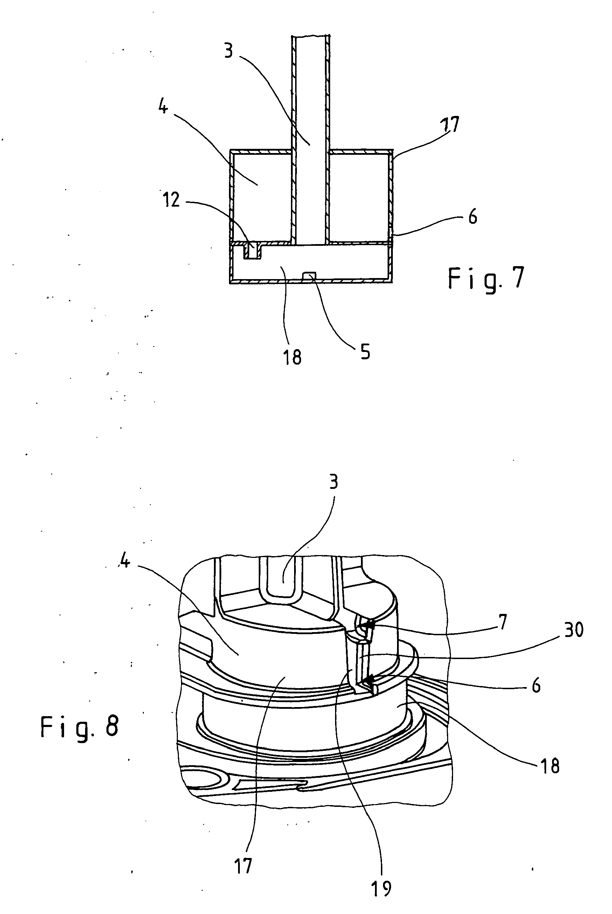

In Fig. 7 ist eine geschnittene Seitenansicht einer besonders bevorzugten Ausgestaltung der Erfindung dargestellt. Neben dem Dämpfungsbecher 3 und dem Vorvolumen 4 ist hier noch ein weiteres Volumen oder eine weitere Kammer 18 dargestellt, die auch als verbreiterte Fortsetzung des Dämpfungsbechers 3 aufgefasst werden kann. Der Dämpfungsbecher 3 ist im unteren Bereich verbreitert, hier bevorzugt auf die gleiche Breite wie die des darüber angeordneten Vorvolumens 4. Am Boden des Volumens 18 ist der Ultraschallwandler 5 angeordnet, der Signale nach oben durch den Dämpfungsbecher 3 aussendet. Das Vorvolumen 4 weist in bekannter Weise einen Einlass 6 und eine Entlüftungsöffnung 9 auf. Innerhalb des Vorvolumens 4 sind auch ergänzend geometrische Strukturen vorgesehen, so wie sie in den Figuren 2 bis 6 beschrieben worden sind. Das Vorvolumen tritt am Ende jedoch nicht unmittelbar in den Dämpfungsbecher 3, sondern über ein Verbindungsrohr 12 mit einer definierten Länge L1 in den verbreiterten Bereich 18 des Vorvolumens 3 ein. Die Länge L1 definiert unmittelbar die Dämpfung des Gesamtsystems, so dass durch Anpassung der Länge L1 des Verbindungsrohrs 12 die Dämpfung des Systems eingestellt werden kann. Durch die in der Kammer 18 größere Breite gegenüber dem Dämpfungsbecher 3 ist auch ein stärkerer Fluss und eine stärkere Bewegung des Mediums im Bereich des Ultraschallwandlers 5 möglich. Dadurch wird eine Verschlammung in diesem unteren Bereich vermieden. Von außen betrachtet bilden dieser untere verbreiterte Bereich 18 und das Vorvolumen 4 einen gemeinsamen Block aus, so dass dadurch auch eine im Betrieb robuste Ausgestaltung erreicht wird.

In Fig. 8 ist eine perspektivische Außenansicht einer solchen Ausführungsform dargestellt, bei der in der Außenwand 17 des Vorvolumens 4 eine Einbuchtung 19 vorgesehen ist. In der schmalen Einbuchtung sind an den Seitenwänden dieser Einbuchtung 19 die Einlassöffnung 6 und die Auslassöffnung oder Entgasungsöffnung 7 vorgesehen. Diese sind mit ihren Öffnungen auf die Einbuchtung ausgerichtet. Zudem ist ein Vorsprung 30 ausgebildet, der die Einlassöffnung 6 von oben überdeckt. Die Einlassöffnung 6 ist zur gegenüberliegenden Wand der Einbuchtung 19 und nicht nach außen gerichtet. Insgesamt entsteht so eine eingezogene Taschenstruktur, durch die ein direktes Anströmen der Öffnungen verhindert wird.

Durch die Befüllung des nahezu blasenfreien Öles aus dem Verbindungsrohr 12 mit kleinem Durchmesser in die großflächige Kammer, die hier auch als verbreiteter Bereich 18 bezeichnet ist, wird das Medium größtmöglich entspannt und der sich auf dem Ultraschallsensor 5 aufbauende Öllevel ist mikroblasenfrei. Die sprunghafte Rücknahme des Querschnitts von dem Durchmesser des verbreiterten Bereichs 18 zu dem Dämpfungsbecher 3 ergibt dann eine schnelle Öllevelsensierung. Ein weiterer wesentlicher Vorteil der verschiedenen Räume 4, 18 und 3 ist der, dass sich das Medium ständig beruhigt und sich die Messstrecke im Dämpfungsbecher 3 oberhalb der Räume 4 und 18 befindet. Da der Ultraschallsensor 5 in den Motorraum von unten hineinragt, ist ein minimaler Platzbedarf erforderlich.

## Patentansprüche

1. Vorrichtung zum Erfassen eines Füllstands eines Fluids in einem Behälter (2), wobei die Vorrichtung (1) ein Vorvolumen (4), einen Dämpfungsbecher (3) mit einer Einlassöffnung (7) und im Bereich des Dämpfungsbechers (3) einen Ultraschallwandler (5) aufweist,
bei der das Vorvolumen (4) eine Einlassöffnung (6) aufweist, durch die Fluid in das Vorvolumen (4) eintreten kann, und
bei der das Vorvolumen (4) mit der Einlassöffnung (7) des Dämpfungsbechers (3) verbunden ist,
**dadurch gekennzeichnet,**
**dass** aus dem Vorvolumen (4) ein Rohr (12) mit definierter Länge und definiertem Durchmesser in den Dämpfungsbecher (3) führt,
**dass** dieses Rohr (12) die Verbindung zwischen Vorvolumen (4) und Dämpfungsbecher (3) darstellt und in den Dämpfungsbecher (3) oder in das Vorvolumen (4) hineinragt.

2. Vorrichtung nach Anspruch 1, **dadurch gekennzeichnet, dass** das Vorvolumen (4) mindestens so groß ist wie der Dämpfungsbecher (3).

3. Vorrichtung nach einem der Ansprüche 1 oder 2, **dadurch gekennzeichnet, dass** das Vorvolumen mindestens doppelt so groß ist wie der Dämpfungsbecher (3).

4. Vorrichtung nach einem der vorhergehenden Ansprüche, **dadurch gekennzeichnet, dass** das Vorvolumen (4) eine Entlüftungsöffnung (9) aufweist.

5. Vorrichtung nach einem der vorhergehenden Ansprüche, **dadurch gekennzeichnet, dass** das Vorvolumen (4) eine geometrische Struktur zur Führung des Mediums aufweist.

6. Vorrichtung nach Anspruch 5, **dadurch gekennzeichnet, dass** das Vorvolumen (4) eine runde Grundfläche aufweist und die geometrische Struktur das Medium mindestens einmal um den Mittelpunkt der Grundfläche leitet.

7. Vorrichtung nach einem der vorhergehenden Ansprüche, **dadurch gekennzeichnet, dass** der Dämpfungsbecher (3) im unteren Bereich eine Kammer (31) bzw. einen verbreiterten Bereich (18) aufweist.

8. Vorrichtung nach einem der vorhergehenden Ansprüche, **dadurch gekennzeichnet, dass** das Vorvolumen (4) mit dem unteren Bereich des Dämpfungsbechers (3) verbunden ist.

9. Vorrichtung nach Anspruch 7, **dadurch gekennzeichnet, dass** ein Rohr (12) aus dem Vorvolumen (4) in die Kammer (31) bzw. den verbreiterten Bereich (18) geführt ist.

10. Vorrichtung nach einem der Ansprüche 8 oder 9, **dadurch gekennzeichnet, dass** im Bereich des Ultraschallwandlers (5) ein Temperatursensorelement angeordnet ist und dass das Rohr (12) auf das Temperatursensorelement ausgerichtet ist.

11. Vorrichtung nach einem der vorhergehenden Ansprüche, **dadurch gekennzeichnet, dass** das Vorvolumen (4) in der Außenkontur eine Einbuchtung aufweist und dass die Einlassöffnung (6) in dieser Einbuchtung angeordnet ist.

12. Vorrichtung nach Anspruch 11, **dadurch gekennzeichnet, dass** die Einlassöffnung (6) in die Einbuchtung gerichtet ist.

13. Motor, insbesondere Kraftfahrzeugmotor, **dadurch gekennzeichnet, dass** der Motor eine Vorrichtung nach einem der vorhergehenden Ansprüche aufweist.

14. Kraftfahrzeug nach einem der vorhergehenden Ansprüche, **dadurch gekennzeichnet, dass** das Kraftfahrzeug eine Vorrichtung nach einem der Ansprüche 1 bis 13 aufweist.

## Claims

1. A device for detecting a fill level of a fluid in a container (2),
wherein the device (1) has a pre-volume (4), a damping cup (3) with an inlet opening (7) and an ultrasonic transducer (5) in the region of the damping cup (3),
in which the pre-volume (4) has an inlet opening (6), through which the fluid can enter into the pre-volume (4), and
in which the pre-volume (4) is connected to the inlet opening (7) of the damping cup (3),
**characterised**
**in that** a tube (12) with defined length and defined diameter leads out of the pre-volume (4) into the damping cup (3),
**in that** this tube (12) constitutes the connection between pre-volume (4) and damping cup (3) and protrudes into the damping cup (3) or into the pre-volume (4).

2. The device according to claim 1, **characterised in that** the pre-volume (4) is at least as large as the damping cup (3).

3. The device according to one of claims 1 or 2, **characterised in that** the pre-volume is at least twice as large as the damping cup (3).

4. The device according to one of the preceding claims, **characterised in that** the pre-volume (4) has a ventilation opening (9).

5. The device according to one of the preceding claims, **characterised in that** the pre-volume (4) has a geometric structure for carrying the medium.

6. The device according to claim 5, **characterised in that** the pre-volume (4) has a round base surface and the geometric structure routes the medium around the centre point of the base surface at least once.

7. The device according to one of the preceding claims, **characterised in that** the damping cup (3) has a chamber (31) or a widened region (18) in the lower region.

8. The device according to one of the preceding claims, **characterised in that** the pre-volume (4) is connected to the lower region of the damping cup (3).

9. The device according to claim 7, **characterised in that** a tube (12) is guided out of the pre-volume (4) into the chamber (31) or the widened region (18).

10. The device according to one of claims 8 or 9, **characterised in that** a temperature sensor element is arranged in the region of the ultrasonic transducer (5) and **in that** the tube (12) is orientated towards the temperature sensor element.

11. The device according to one of the preceding claims, **characterised in that** the pre-volume (4) has an indentation in the outer contour and **in that** the inlet opening (6) is arranged in this indentation.

12. The device according to claim 11, **characterised in that** the inlet opening (6) is directed into the indentation.

13. An engine, particularly a motor vehicle engine, **characterised in that** the engine has a device according to one of the preceding claims.

14. The motor vehicle according to one of the preceding claims, **characterised in that** the motor vehicle has a device according to one of claims 1 to 13.

## Revendications

1. Dispositif de détection d'un niveau de remplissage d'un fluide dans un récipient (2),
dans lequel le dispositif (1) présente un volume préliminaire (4), un pot d'amortissement (3) avec une ouverture d'admission (7) et un convertisseur d'ultrasons (5) au niveau du pot d'amortissement (3),
dans lequel le volume préliminaire (4) présente une ouverture d'admission (6), à travers laquelle le fluide peut pénétrer dans le volume préliminaire (4)
et
dans lequel le volume préliminaire (4) est relié à l'ouverture d'admission (7) du pot d'amortissement (3),
**caractérisé**
**en ce que** à partir d'un volume préliminaire (4) un tuyau (12) avec une longueur définie et un diamètre défini mène au pot d'amortissement (3),
**en ce que** ce tuyau (12) représente la liaison entre le volume préliminaire (4) et le pot d'amortissement (3) et saille à l'intérieur du pot d'amortissement (3) ou du volume préliminaire (4).

2. Dispositif selon la revendication 1, **caractérisé en ce que** le volume préliminaire (4) est au moins aussi grand que le pot d'amortissement (3).

3. Dispositif selon une des revendications 1 ou 2, **caractérisé en ce que** le volume préliminaire est au moins deux fois aussi grand que le pot d'amortissement (3).

4. Dispositif selon une des revendications précédentes, **caractérisé en ce que** le volume préliminaire (4) présente une ouverture d'évacuation d'air (9).

5. Dispositif selon une des revendications précédentes, **caractérisé en ce que** le volume préliminaire (4) présente une structure géométrique pour le guidage du milieu.

6. Dispositif selon la revendication 5, **caractérisé en ce que** le volume préliminaire (4) présente une surface de fond arrondie et la structure géométrique guide le milieu au moins une fois autour du point central de la surface de fond.

7. Dispositif selon une des revendications précédentes, **caractérisé en ce que** le pot d'amortissement (3) présente dans la zone inférieure une chambre (31) ou une zone élargie (18).

8. Dispositif selon une des revendications précédentes, **caractérisé en ce que** le volume préliminaire (4) est relié à la zone inférieure du pot d'amortissement (3).

9. Dispositif selon la revendication 7, **caractérisé en ce que** un tuyau (12) est guidé hors du volume préliminaire (4) dans la chambre (31) ou la zone élargie (18).

10. Dispositif selon une des revendications 8 ou 9, **caractérisé en ce que**, au niveau du convertisseur d'ultrasons (5), un élément de capteur de température est disposé et **en ce que** le tuyau (12) est aligné sur l'élément de capteur de température.

11. Dispositif selon une des revendications précédentes, **caractérisé en ce que** le volume préliminaire (4) présente un renfoncement dans son contour extérieur et **en ce que** l'ouverture d'admission (6) est disposé dans ce renfoncement.

12. Dispositif selon la revendication 11, **caractérisé en ce que** l'ouverture d'admission (6) est alignée sur le renfoncement.

13. Moteur, notamment moteur de véhicule automobile, **caractérisé en ce que** le moteur présente un dispositif selon une des revendications précédentes.

14. Véhicule automobile selon une des revendications précédentes, **caractérisé en ce que** le véhicule automobile présente un dispositif selon une des revendications 1 à 13.
